# EUROPEAN PATENT SPECIFICATION

(11) **EP 3 552 872 B1**
(45) Date of publication and mention of the grant of the patent: **09.06.2021**
(21) Application number: 17877726.4
(22) Date of filing: 07.12.2017
(51) Int. Cl.: B60N 2/50, F16F 15/02, F16F 15/03, B60N 2/54

(54) **SUSPENSION**
SUSPENSION
SUSPENSION

(30) Priority: 09.12.2016 JP 2016239921
(43) Date of publication of application: 16.10.2019
(73) Proprietor: Delta Kogyo Co., Ltd., Aki-gun, Hiroshima 735-8501 (JP); Delta Tooling Co., Ltd., Hiroshima-shi, Hiroshima 736-0084 (JP)
(72) Inventor: FUJITA, Etsunori, Hiroshima-shi, Hiroshima 736-0084 (JP); OSHIMO, Hiroki, Aki-gun, Hiroshima 735-8501 (JP)
(74) Representative: Hoffmann Eitle
(86) International application number: PCT/JP2017/044103
(87) International publication number: WO 2018/105713

(56) References cited:
- EP-A2- 1 172 581
- JP-A- 2004 353 770
- JP-A- 2004 353 770
- JP-A- 2010 179 719
- JP-A- 2010 179 720
- JP-A- 2010 179 720

## Description

### Technical Field

The present invention relates to a suspension.

### Background Art

JP 2010-179719 A and JP 2010-179720 A disclose a seat suspension in which an upper frame provided to be movable up and down relative to a lower frame is elastically supported by a magnetic spring and torsion bars. In the disclosed seat suspension, a characteristic that restoring force in the same direction as a working direction of restoring force of the torsion bars increases in accordance with an increase in a displacement amount is referred to as "a positive spring characteristic (a spring constant at this time is referred to as "a positive spring constant") and a characteristic that the restoring force in the same direction as the working direction of the restoring force of the torsion bars decreases in spite of the increase in the displacement amount is referred to as "a negative spring characteristic (a spring constant at this time is referred to as "a negative spring constant"). By making use of the fact that the magnetic spring exhibits the negative spring characteristic in a predetermined displacement range and combining the torsion bars exhibiting the positive spring characteristic, in the predetermined displacement range, the seat suspension has a characteristic of a constant load region where a load value of the whole system resulting from the superposition of the characteristics of both is substantially constant (a region where a spring constant is substantially zero) regardless of a displacement amount.

Another suspension is disclosed in JP 2004-353 770 A forming the basis for the preamble of claim 1.

### Summary of the Invention

### Problems to Be Solved by the Invention

In the seat suspension of JP 2010-179719 A and JP 2010-179720 A, owing to the aforesaid structure using the magnetic spring and the torsion bars, vibrations having predetermined frequencies and amplitudes are absorbed using the constant load region where the spring constant resulting from the superposition of the spring constants of both is substantially zero, while energy caused by vibration or impact is absorbed by a damper suspended between the upper frame and the lower frame. Incidentally, the magnetic spring includes: stationary magnets fixed to the lower frame; and a movable magnet which is linked to the upper frame through links and moves relative to the stationary magnets in accordance with the up-down movement of the upper frame. The constant load region used to absorb the vibration is set to correspond to the displacement range in which the magnetic spring exhibits the negative spring characteristic as described above, with a midpoint of this displacement range typically set to correspond to a neutral position of an up-down stroke of the upper frame. When the movable magnet makes the relative movement beyond the range where it exhibits the negative spring characteristic, the magnetic spring exhibits the positive spring characteristic, and on this positive spring characteristic, the positive spring characteristic of the torsion bars is superposed. As a result, when the upper frame approaches the lower limit position and the upper limit position, the positive spring constant of the whole spring mechanism which is the combination of the torsion bars and the magnetic spring rapidly becomes higher. That the positive spring constant is high when the upper frame approaches the upper limit position enables the guiding to a balanced point while supporting the weight at the time of seating, which is useful for giving a stable supporting feeling, but when the upper frame approaches the lower limit position, due to the rapid variation in the spring constant, the seated person may feel a relatively strong bottoming feeling. Further, the use of a damper having high damping force in order to more surely reduce the bottoming of the upper frame is considered as one factor that gives a stronger bottoming feeling to the seated person.

The present invention was made in consideration of the above problem and has an object to provide a suspension that achieves a further reduction in a bottoming feeling when the upper frame approaches the lower limit position.

### Means for Solving the Problems

In order to solve the aforesaid problem, the suspension of the present invention is a suspension which includes: an upper frame and a lower frame which are supported so as to be capable of a separating and approaching operation relative to each other via a frame link mechanism; and a spring mechanism which elastically biases the upper frame,
the spring mechanism including a combination of:
a linear spring which biases the upper frame in a direction in which the upper frame separates from the lower frame, the linear spring exhibiting a linear characteristic; and
a magnetic spring which includes: a stationary magnet fixedly disposed on the lower frame or the upper frame; and a movable magnet which is supported on the upper frame or the lower frame through a magnet link and whose position relative to the stationary magnet changes in accordance with the separating and approaching operation of the upper frame, the magnetic spring exhibiting a nonlinear characteristic of having a spring constant that varies according to the relative position of the stationary magnet and the movable magnet,
wherein, in the magnetic spring, a displacement amount of the movable magnet when the upper frame is displaced in a lower operating range which is between a neutral position and a lower limit position of the upper frame is smaller than a displacement amount of the movable magnet when the upper frame is displaced in an upper operating range which is between the neutral position and an upper limit position of the upper frame, and the magnetic spring has a softening spring characteristic that, when the upper frame makes a downward-direction relative displacement, a spring constant of the magnetic spring which acts when the upper frame is displaced in the lower operating range is smaller than a spring constant of the magnetic spring which acts when the upper frame is displaced in the upper operating range.

Preferably, in accordance with the displacement of the movable magnet relative to the stationary magnet,
the magnetic spring exhibits a negative spring characteristic when the upper frame is displaced in a first upper operating range and exhibits a positive spring characteristic when the upper frame is displaced in a second upper operating range, where the first upper operating range and the second upper operating range are respectively on the neutral position side and on the upper limit position side of an intermediate position of the upper operating range which is between the neutral position and the upper limit position, and the positive spring characteristic and the negative spring characteristic are characteristics that restoring force in the same direction as a working direction of restoring force of the linear spring increases and reduces respectively,
the magnetic spring exhibits a spring constant smaller than a spring constant of the linear spring when the upper frame is displaced in the lower operating range, and
a spring characteristic of the whole spring mechanism which results from a combination of the positive spring characteristic of the linear spring and each of the spring characteristics of the magnetic spring has:
a constant load region when the upper frame is displaced in the first upper operating range, the constant load region being a region where a spring constant is substantially constant due to the superposed positive spring characteristic of the linear spring; a high spring constant region when the upper frame is displaced in the second upper operating range, the high spring constant region being a region where the spring constant is higher due to the two superposed positive spring constants; and a low spring constant region when the upper frame is displaced in the lower operating range, the low spring constant region being a region where the spring characteristic corresponding to the entire lower operating range is a positive spring characteristic with a lower spring constant than in the high spring constant region.

Preferably, the movement amount of the movable magnet of the magnetic spring when the upper frame is displaced in the lower operating range is equal to or less than 1/2 of the movement amount of the movable magnet when the upper frame is displaced in the upper operating range.

Preferably, the suspension further includes a damper which damps energy generated when the upper frame makes the separating and approaching operation from/to the lower frame, and
the damper is lower in damping force when the upper frame operates in a direction of the lower limit position than when the upper frame operates in a direction of the upper limit position.

Preferably, the damper is pivotally supported on the upper frame through a bracket which pivots in accordance with an up-down movement of the upper frame.

The suspension can be configured such that, when an up-down displacement amount of the upper frame is a predetermined amount or more, the movable magnet of the magnetic spring is capable of being moved by the magnet link to a facing range outer position which is beyond a range where the movable magnet faces the stationary magnet.

Preferably, a balanced point when a weight of a load is applied to the upper frame changes according to a gravity center position of a seated person or input vibration, and a damping ratio at the balanced point varies according to a position of the balanced point.

Preferably, an initial position of the balanced point when the weight of the load is applied to the upper frame is adjustable.

Preferably, the suspension is used as a seat suspension of a vehicle in which the lower frame is fixed to a vehicle body and a seat is supported by the upper frame.

### Effect of the Invention

In the present invention, in the magnetic spring, the displacement amount of the movable magnet when the upper frame is displaced in the lower operating range which is between the neutral position and the lower limit position is smaller than the displacement amount of the movable magnet when the upper frame is displaced in the upper operating range which is between the neutral position and the upper limit position, and when the upper frame makes the downward-direction relative displacement, the magnetic spring has the softening spring characteristic that the spring constant of the magnetic spring that acts when the upper frame is displaced in the lower operating range is smaller than the spring constant of the magnetic spring that acts when the upper frame is displaced in the upper operating range. A region where the negative spring characteristic is exhibited by the magnetic spring is typically used for improving a vibration absorption characteristic and lowering a resonant frequency. Accordingly, in ordinary conventional setting, this region appears uniformly across the upper operating range and the lower operating range, but in the present invention, the spring constants in the upper operating range and in the lower operating range are different, thereby making damping coefficients in the upper operating range and in the lower operating range different. Specifically, due to the aforesaid softening spring characteristic, in the lower operating range where elastic energy of the magnetic spring is smaller than in the upper operating range, the overall spring characteristic resulting from the superposition of the spring characteristic of the linear spring is more likely to appear in the positive direction than in the upper operating range. As a result, when the upper frame is displaced from the neutral position in the lower limit position direction, as compared with a conventional structure where the elastic energy in the upper operating range is equal to that in the lower operating range and thus a spring characteristic rapidly becomes the positive spring characteristic with a high spring constant, vibration or impact is gradually alleviated owing to the positive spring characteristic with a relatively low spring constant, so that a bottoming feeling is reduced when the upper frame approaches the lower limit position.

Further, as the spring characteristic of the whole spring mechanism, the positive spring characteristic acts over the whole stroke of the lower operating range though the value of the spring constant is low, and accordingly, it is possible to use a damper whose damping force is lower when the upper frame is displaced in the lower limit position direction than when it is displaced in the upper limit position direction, which can also contribute to the reduction in the bottoming feeling. In the present invention, since the upper frame is supported by the frame link mechanism, structural damping is small and the spring constant of a structural system is small. In such a case, viscous damping of the damper acts well to a low-frequency input with a large amplitude to reduce a resonance peak, but in order to stabilize the damping ratio at around 0.2 to 0.4 which is typically an ideal damping ratio, the configuration in which the spring constant of the spring mechanism gradually varies is preferably combined with a damper whose damping force on an elongation side differs from that on a contraction side as in the present invention. Owing to this configuration, when a high-frequency input with a small amplitude is given at a balanced point which is near the neutral position of the upper frame, the positive spring constant acts to the downward-direction displacement for which the damping force of the damper is small, and a substantially zero characteristic with a lower spring constant than in the case of the downward-direction displacement acts to an upward-direction displacement for which the damping force of the damper increases, enabling the efficient absorption of the vibration.

### Brief Description of Drawings

[FIG. 1] FIG. 1 is a perspective view of a seat suspension according to a first embodiment of the present invention.
[FIGs. 2] FIG. 2(a) is a plane view of the seat suspension according to the first embodiment, FIG. 2(b) is a bottom view thereof, and FIG. 2(c) is a side view thereof.
[FIGs. 3] FIG. 3(a) is a perspective view of the seat suspension according to the first embodiment, with a damper removed therefrom, and FIG. 3(b) is a side view thereof.
[FIGs. 4] FIGs. 4(a) to (c) are explanatory views of the operation of the seat suspension according to the first embodiment.
[FIG. 5] FIG. 5 is an explanatory view of the operation of the seat suspension according to the first embodiment.
[FIG. 6] FIG. 6 is a view illustrating an essential part of the seat suspension of the first embodiment which is used in a test example.
[FIG. 7] FIG. 7 is a chart illustrating a static load characteristic of the seat suspension of the test example.
[FIG. 8] FIG. 8 is a chart illustrating static load characteristics of seat suspensions according to test examples and comparative examples.
[FIG. 9] FIG. 9 is a chart illustrating a damping ratio and so on of the seat suspension of the test example.
[FIG. 10] FIG. 10 is a chart illustrating vibration transmissibilities of the seat suspensions according to the test examples and the comparative examples.
[FIGs. 11] FIGs. 11(a), (b) are charts illustrating results of an impact vibration test of the seat suspensions according to the test examples and the comparative examples.
[FIGs. 12] FIG. 12(a) is a chart illustrating evaluation results of SEAT values of EM6 of the seat suspensions according to the test examples and the comparative examples, and FIG. 12(b) is a chart illustrating evaluation results of SEAT values of EM8 of the seat suspensions according to the test examples and the comparative examples.
[FIG. 13] FIG. 13 is a chart illustrating a change amount of a balanced point in a dynamic vibrating state from a balanced point in a static state when a subject is seated, at each frequency, in the seat suspensions according to the test examples and the comparative example.
[FIGs. 14] FIG. 14(a) is a perspective view illustrating a seat suspension according to a second embodiment of the present invention, FIG. 14(b) is a view illustrating how a magnetic spring and a damper are attached, and FIG. 14(c) is a view illustrating a lower attachment plate which supports the magnetic spring and the damper.
[FIGs. 15] FIG. 15(a) is a plane view of the seat suspension according to the second embodiment and FIG. 15(b) is a side view thereof.
[FIGs. 16] FIGs. 16(a) to (e) are explanatory views of the operation of the seat suspension according to the second embodiment.
[FIG. 17] FIG. 17 is a chart illustrating static load characteristics of the seat suspension according to the second embodiment.

### Modes for Carrying out the Invention

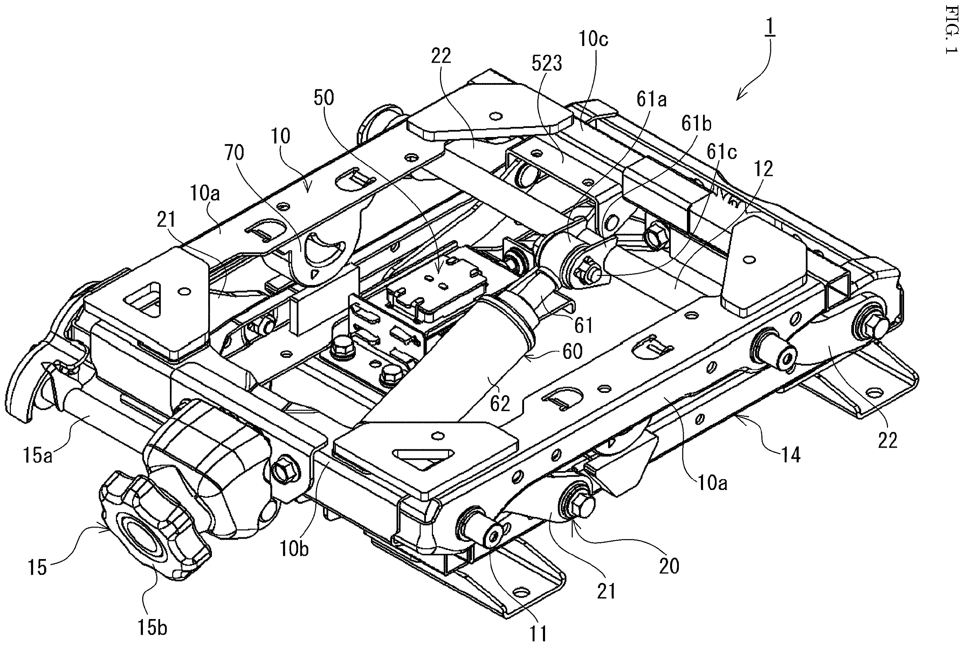

The present invention will be hereinafter described in more detail based on embodiments illustrated in the drawings. FIG. 1 to FIG. 5 illustrate the structure of a seat suspension 1 for vehicles such as a passenger car, a truck, a bus, and a forklift, which is a suspension according to a first embodiment of the present invention. As illustrated in these drawings, the seat suspension 1 of this embodiment includes an upper frame 10 and a lower frame 14 which are in a substantially rectangular shape, and the upper frame 10 and the lower frame 14 are linked to each other through a frame link mechanism 20 with a parallel link structure including pairs of left and right front links 21 and left and right rear links 22.

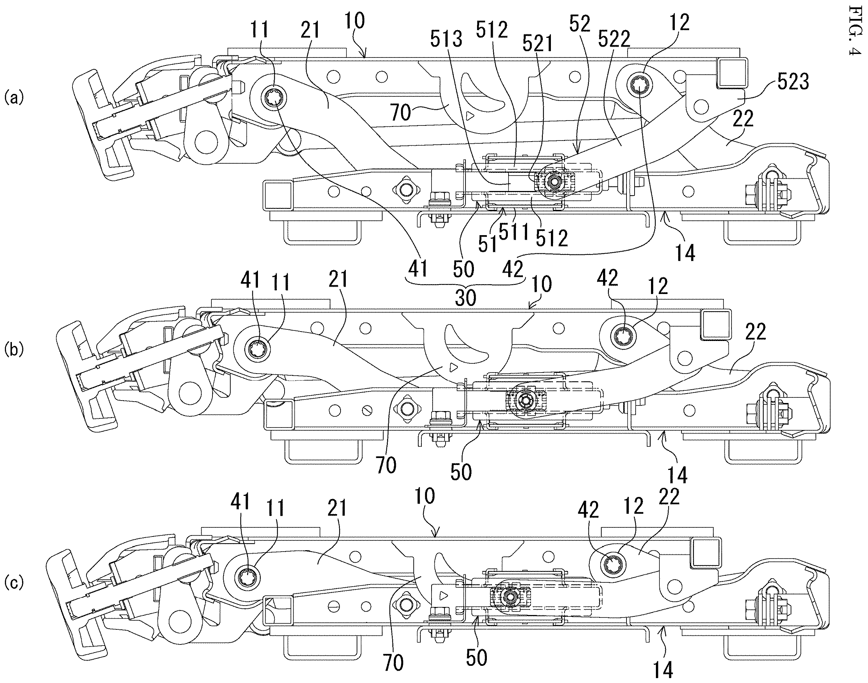

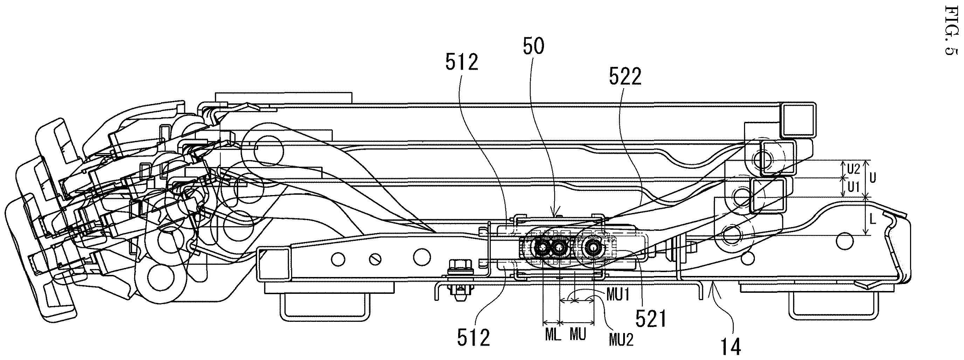

The upper frame 10 supports a vehicle seat (not illustrated), and the lower frame 14 is fixed to a vehicle body side (for example, a floor (not illustrated)). Upper portions of the pair of left and right front links 21, 21 are linked to an upper front frame 11 which is disposed slightly behind a front edge portion 10b of the upper frame 10, and upper portions of the pair of left and right rear links 22, 22 are linked to an upper rear frame 12 disposed sightly in front of a rear edge portion 10c of the upper frame 10. End portions of the upper front frame 11 and the upper rear frame 12 are inserted to attachment holes formed in a pair of left and right side edge portions 10a, 10a of the upper frame 10, and the front links 21, 21 and the rear links 22, 22 are located near side portions of the upper frame 10 and the lower frame 14 respectively. With this structure, the upper frame 10 is movable up and down relative to the lower frame 14, more accurately, since the frame link mechanism 20 is constituted by the parallel link structure including the front links 21, 21 and the rear links 22, 22, the upper frame 10 moves up and down between an obliquely upper rear position which is an upper limit position and an obliquely lower front position which is a lower limit position, along a rotation trajectory of the front links 21, 21 and the rear links 22, 22 (refer to FIGs. 4 and FIG. 5).

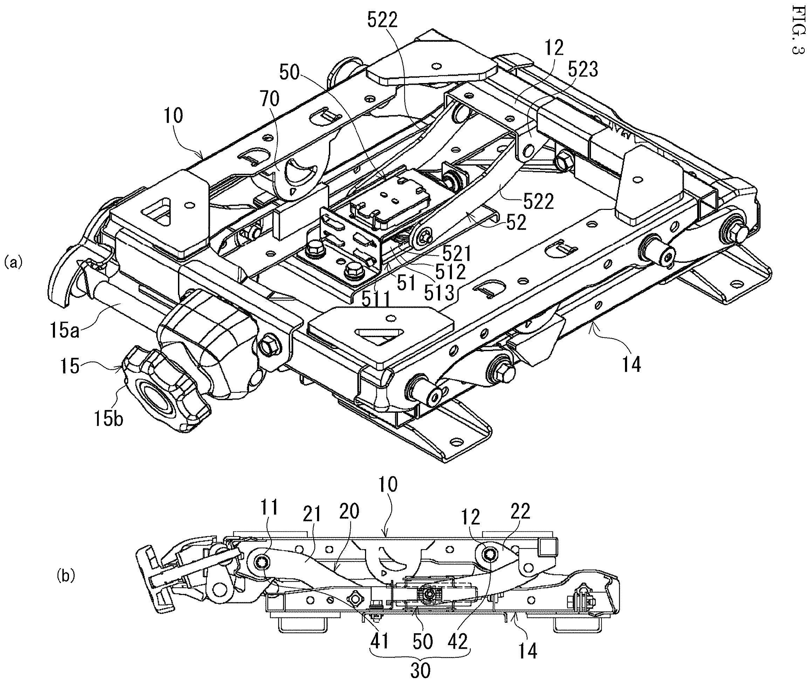

The upper front frame 11 and the upper rear frame 12 are each formed of a pipe member in this embodiment, and torsion bars 41, 42 are inserted to the upper front frame 11 and the upper rear frame 12 respectively (refer to FIG. 3(b) and FIG. 4). In this embodiment, the torsion bars 41, 42 are linear springs which exhibit linear characteristics that their load-deflection characteristics change approximately linearly, and constitute a spring mechanism 30 together with a later-described magnetic spring 50. The torsion bars 41, 42 are provided such that their one-side ends do not rotate relative to the upper front frame 11 and the upper rear frame 12 respectively, and the torsion bars 41, 42 are set so as to exhibit elastic force which biases the upper frame 10 in a direction in which the upper frame 10 relatively separates from the lower frame 14, that is, in an upward direction. The other ends of the torsion bars 41, 42 are connected to plate members 15c, 15d of an initial position adjusting member 15 respectively. The initial position adjusting member 15 is configured such that the rotation of its adjustment dial 15b causes the rotation of its adjustment shaft 15a, and this rotation causes the rotation of the plate member 15c connected to the front links 21, 21-side torsion bar 41 and then causes the rotation of the plate member 15d connected to the rear links 22, 22 side-torsion bar 42 linked to the plate member 15c through a link plate 15e. Therefore, when the adjustment dial 15b is operated to rotate, the torsion bars 41, 42 are twisted in either direction, so that initial elastic force of the torsion bars 41, 42 is adjusted, and irrespective of the weight of a seated person, it is possible to adjust the position of the upper frame 10 to a predetermined position (for example, a neutral position). Further, the linear springs which bias the upper frame 10 in the direction in which the upper frame 10 relatively separates from the lower frame 14 are not limited to the torsion bars 41, 42, and may be coil springs or the like. However, in order to obtain a positive spring constant with high linearity in a short-stroke range of the upper frame 10, it is preferable to use the torsion bars 41, 42 which can be assembled in rotary shaft parts of the front links 21, 21 and the rear links 22, 22 as in this embodiment.

The magnetic spring 50 includes a stationary magnet unit 51 and a movable magnet unit 52 as illustrated in FIGs. 3 and FIG. 4. The stationary magnet unit 51 includes a stationary-side support frame 511 attached to the lower frame 14 and a pair of stationary magnets 512, 512 supported by the stationary-side support frame 511 and attached a predetermined interval apart from each other in the up and down direction.

The movable magnet unit 52 includes a movable magnet 521 disposed in a space 513 between the stationary magnets 512, 512 which are disposed at the predetermined interval apart from each other to face each other. On an end portion of the movable magnet 521, one-side ends of magnet links 522, 522 are pivotally supported. The other ends of the magnet links 522, 522 are pivotally supported by attachment brackets 523 provided on the rear edge portion 10c of the upper frame 10. With this structure, the displacement of the upper frame 10 in a direction in which it approaches the lower frame 14, that is, in the downward direction causes the movable magnet 521 through the magnet links 522, 522 to move forward (in a direction from the position in FIG. 4(a) toward the position in FIG. 4(c)) in the space 513 between the stationary magnets 512, 512, and the displacement of the upper frame 10 in a direction in which it separates from the lower frame 14, that is, in the upward direction causes the movable magnet 521 through the magnet links 522, 522 to move rearward (in a direction from the position in FIG. 4(c) toward the position in FIG. 4(a)) in the space 513 between the stationary magnets 512, 512.

The spring characteristic that the magnetic spring 50 exhibits when moving in the space 513 between the stationary magnets 512, 512 changes depending on a relative position of the movable magnet 521 and the stationary magnets 512, 512, and its load-deflection characteristic is a nonlinear characteristic. More specifically, if a characteristic that restoring force in a working direction of the elastic force (restoring force) of the torsion bars 41, 42 which are the linear springs, that is, in such a direction as to cause the upper frame 10 to separate from the lower frame 14 increases is referred to as a positive spring characteristic, the magnetic spring 50 exhibits, in its load-deflection characteristic, a negative spring characteristic that the restoring force in this direction reduces in a predetermined displacement amount range.

An example of the structure of the magnetic spring 50 exhibiting such a characteristic is that the stationary magnets 512, 512 arranged to face each other are each composed of two stationary magnets which are magnetized in the thickness direction and arranged along a moving direction of the movable magnet 521 with different poles being adjacent to each other, and a magnetization direction of the movable magnet 521 is the same as its moving direction, so that the negative spring characteristic is exhibited when the movable magnet 521 is in the vicinity of a position where it crosses a boundary of the two stationary magnets 512, 512 whose different poles are adjacent to each other.

As a result, in the spring mechanism 30 of this embodiment including the magnetic spring 50 and the aforesaid torsion bars 41, 42, by adjusting a spring constant of the positive spring characteristic of the torsion bars 41, 42 (positive spring constant) and a spring constant of the magnetic spring 50 in the negative spring characteristic range (negative spring constant) to substantially equal values in the range where the negative spring characteristic acts in the magnetic spring 50, the whole spring mechanism 30 in which both the spring constants are superposed has a constant load region where an applied load does not change even if the displacement amount increases, that is, a region where the spring constant is substantially zero (preferably within a range of about -10 N/mm to about 10 N/mm). In order to use this region where the spring constant is substantially zero as effectively as possible, the movable magnet 521 of the movable magnet unit 52 is preferably set such that its middle position is substantially at the same position as the boundary of the two stationary magnets 512, 512 whose different poles are adjacent to each other, when the upper frame 10 is at the neutral position.

Here, a range between the neutral position and an upper limit position of the upper frame 10 will be referred to as an upper operating range U, a range between the neutral position and a lower limit position of the upper frame 10 as a lower operating range L, a range from the neutral position to an intermediate position in the upper operating range U as a first upper operating range U1, and a range from the intermediate position to the upper limit position as a second upper operating range U2. In this embodiment, adjustment is made so as to generate a negative spring constant substantially equal in absolute value to the positive spring constant of the torsion bars 41, 42 when the movable magnet 521 is in a movement range MU1 corresponding to the first upper operating range U1 (refer to FIG. 5). If setting is made such that, when the upper frame 10 is at the neutral position, the middle position of the movable magnet 521 of the movable magnet unit 52 is substantially at the same position as the boundary of the two stationary magnets 512, 512 whose different poles are adjacent to each other, the negative spring constant occurs until the movable magnet 521 moves to a position corresponding to an intermediate position of the lower operating range L when the upper frame 10 moves from the neutral position in the lower limit position direction, but in this embodiment, the spring constant at this time is smaller in absolute value than the negative spring constant occurring when the movable magnet 521 is in the movement range MU1 corresponding to the first upper operating range U1, that is, elastic energy due to magnetic force generated by the movement of the movable magnet 521 relative to the stationary magnets 512, 512 is smaller when the movable magnet 521 is in the movement range ML corresponding to the lower operating range L than in the movement range MU corresponding to the upper operating range U.

Therefore, in this embodiment, the movable magnet 521 is provided such that its movement amount in the movement range ML corresponding to the lower operating range L of the upper frame 10 is smaller than, preferably 1/2 or less of, its movement amount in the movement range MU corresponding to the upper operating range U of the upper frame 10. For example, in a case where the upper operating range U and the lower operating range L of the upper frame 10 are both 20 mm, the movement amount of the movable magnet 521 in the movement range MU corresponding to the upper operating range U is a substantially equal distance (for example, about 20 mm) to the upper operating range U, but the movement amount of the movable magnet 521 in the movement range ML corresponding to the lower operating range L is set to a shorter distance (for example, 10 mm or less). Consequently, in the movement range MU of the movable magnet 521 corresponding to the upper operating range U, the movable magnet 521 moves by, for example, about 20 mm in the space 513 between the stationary magnets 512, 512, and accordingly, the spring characteristic occurring at this time acts in one-to-one correspondence to the 20 mm stroke of the upper operating range. On the other hand, in the lower operating range L, the spring characteristic occurring while the movable magnet 521 moves by a shorter distance, for example, about 10 mm acts, being distributed to the 20 mm stroke of the lower operating range. As a result, the elastic energy of the magnetic spring 50 acting when the upper frame 10 is displaced in the lower operating range L is smaller than the elastic energy of the magnetic spring 50 acting when it is displaced in the upper operating range M.

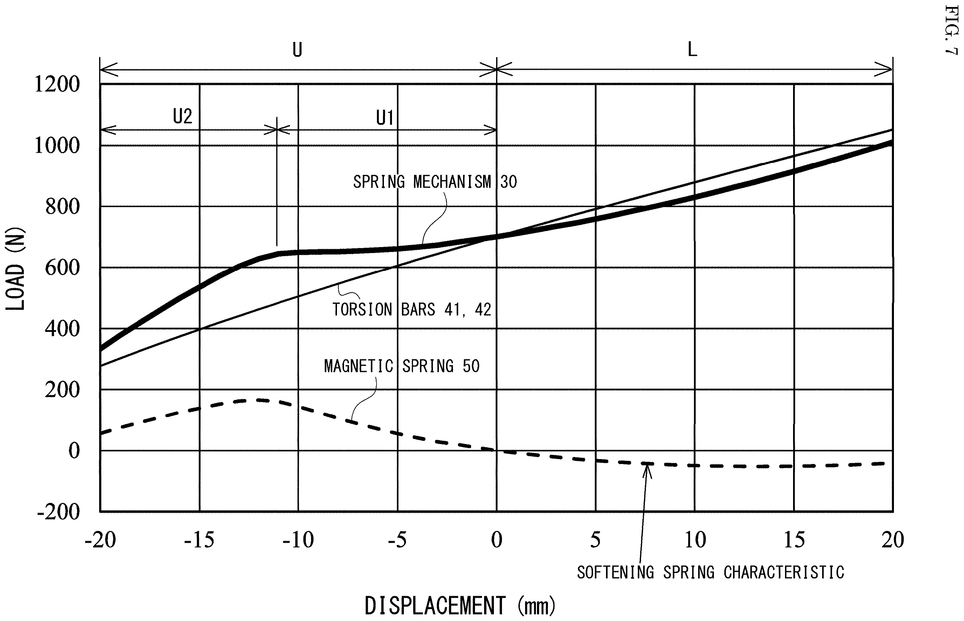

That is, as illustrated in FIG. 7, whether the spring characteristic that the magnetic spring 50 exhibits when moving in the movement range ML corresponding to the lower operating range L of the upper frame 10 is positive or negative, the value of its spring constant (gradient in the load-deflection characteristic) at this time is smaller than values of the spring constants (gradients in the load-deflection characteristics) of the negative spring characteristic and the positive spring characteristic which are exhibited when the magnetic spring 50 moves in the movement range MU corresponding to the upper operating range U. Therefore, in a case where the positive spring constant of the torsion bars 41, 42 is adjusted so as to be substantially equal to the negative spring constant of the magnetic spring 50, the whole spring mechanism 30 has the constant load region where the spring constant is substantially zero in the first upper operating range U1, and in the second upper operating range U2, the positive spring constants are superposed on each other, and thus the whole spring mechanism 30 has a region where a positive spring constant with a sharper gradient angle and a higher value acts (high spring constant region). Therefore, when a large downward-direction load is applied due to the seating operation or impact vibration, the guiding to a balanced point position is possible while the weight is securely supported, owing to the higher value positive spring characteristic corresponding to the second upper operating range U2.

On the other hand, in the lower operating range L, since the spring constant of the magnetic spring 50 is smaller than in the upper operating range U, the whole spring mechanism 30 in which the positive spring constant of the torsion bars 41, 42 is superposed has a positive spring constant value smaller than the positive spring constant value of the torsion bars 41, 42 if the spring constant of the magnetic spring 50 is within a negative range. Even if the spring constant of the magnetic spring 50 is within a positive range, owing to its small spring constant value, the spring constant value of the whole spring mechanism 30 where the positive spring characteristic of the torsion bars 41, 42 is superposed also becomes smaller than in the aforesaid second upper operating range U2. Specifically, in the whole stroke of the lower operating range L from the neutral position to the lower limit position of the upper frame 10, the whole spring mechanism 30 has the region where the soft positive spring constant acts (low spring constant region). Consequently, within the range from the neutral position to the lower limit position of the upper frame 10, the whole spring mechanism 30 acts so as to gradually absorb vibration or impact because of its soft positive spring characteristic, enabling a reduction in a bottoming feeling.

In order to make the movement amount of the movable magnet 521 in the movement range ML corresponding to the lower operating range L smaller than the movement amount of the movable magnet 521 in the movement range MU corresponding to the upper operating range U in spite that the maximum strokes of the upper operating range U and the lower operating range L of the upper frame 10 are substantially equal, this embodiment adopts the following configuration. First, the stationary magnets 512, 512 are disposed in a direction perpendicular to the up-down movement direction of the upper frame 10 (disposed in a direction parallel to the floor since the upper frame 10 moves up and down in the direction vertical to the floor of the vehicle body), and the stationary magnets 512, 512 are attached at a position lower than the neutral position of the upper frame 10, preferably, attached to the lower frame 14 through the stationary-side support frame 511 such that the space 513 between the stationary magnets 512, 512 which serves as a passage of the movable magnet 521 becomes parallel to the floor. Consequently, the movement direction of the movable magnet 521 is perpendicular to the movement direction of the upper frame 10 and parallel to the floor. Preferably, in a side view, a virtual line connecting a support point of the movable magnet 521 and a support point of the upper frame 10 when it is at the lower limit position is set to - 10 to 10 degrees in terms of an angle of the upper frame 10 to the floor. More preferably, in the side view, the virtual line connecting the support point of the movable magnet 521 and the support point of the upper frame 10 when it is at the upper limit position is set to 30 to 60 degrees in terms of the angle of the upper frame 10 to the floor. Further, by adjusting the front-rear position of the stationary magnet unit 51 in the seat suspension 1 to adjust the length from a support position of the attachment brackets 523 for the magnet links 522 to the support position of the movable magnet 521, it is also possible to increase/decrease the maximum strokes of the lower operating range L and the upper operating range U corresponding to the movement amount of the movable magnet 521 in the movement range ML and its movement amount in the movement range MU. Note that the movement amount of the movable magnet 521 in the movement range MU and its movement amount in the movement range ML are preferably set within a range of 2 : 1 to 5 : 1 in terms of a ratio of the movement amount in MU : the movement amount in ML.

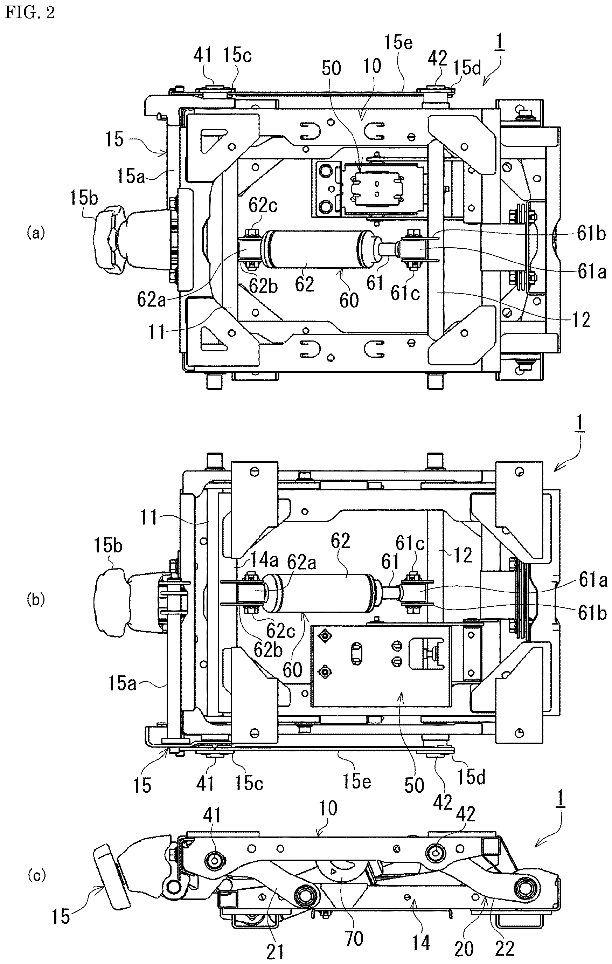

The seat suspension 1 of this embodiment further includes a damper 60 for damping vibration. The damper 60 used in this embodiment is a telescopic damper having a piston rod 61 and a cylinder 62 in which a piston attached to the piston rod 61 reciprocates. An end portion 61a of the piston rod 61 is pivotally supported on the upper rear frame 12 extending in the width direction at a position close to the rear portion of the upper frame 10, through brackets 61b and a shaft member 61c (refer to FIG. 1 and FIGs. 2(a), (b)), and an end portion 62a of the cylinder 62 is pivotally supported on a lower front pipe 14a extending in the width direction at a position close to the front portion of the lower frame 14, through brackets 62b and a shaft member 62c (refer to FIGs. 2(a), (b)). Consequently, when, by the frame link mechanism 20 constituted by the parallel link structure, the upper frame 10 is caused to make the separating and approaching operation so as to make an arc motion relative to the lower frame 14, the piston attached to the piston rod 61 linearly reciprocates in the cylinder 62, so that predetermined damping force is exhibited.

Here, in this embodiment, the upper rear frame 12 is provided so as to rotate relative to the torsion bar 42 in accordance with the relative up-down movement of the upper frame 10, and the brackets 61b are provided on the upper rear frame 12 so as to project forward. Therefore, in accordance with the up-down movement of the upper frame 10, the brackets 61b pivot up and down on the upper rear frame 12 which is a pivot center. The end portion 61a of the piston rod 61 is pivotally supported by the brackets 61b, and as compared with the structure in which it is pivotally supported directly on the side frame 10a of the upper frame 10 as in JP 2010-179719 A , it is possible to increase an amount of the reciprocation of the piston owing to the up-down pivotal motion to increase the damping force of the damper 60. Incidentally, the up-down pivotal motion of the brackets 61b will be described in more detail in a later-described second embodiment.

In this embodiment, the spring mechanism 30 composed of the torsion bars 41, 42 constituting the linear springs and the magnetic spring 50 exhibits the soft positive spring characteristic when the upper frame 10 is displaced in the lower operating range L, has the constant load region where the spring constant is substantially zero when the upper frame 10 is displaced in the first upper operating range U1 of the upper operating range U, and has the region with the positive spring characteristic having a large spring constant when the upper frame 10 is displaced in the second upper operating range U2. That is, when the upper frame 10 is displaced in the lower limit position direction (bottoming direction), force with the soft positive spring characteristic is received at a stage where it moves from the neutral position in the lower limit position direction, and the impact is slowly alleviated using the whole stroke of the lower operating range L, but when the upper frame 10 is displaced in the upper limit position direction (direction toward the top), the positive spring characteristic acts as it moves from the neutral position past the first upper operating range U1 which is the intermediate position and toward the upper limit position. Therefore, at the time of the operation in the upper limit position direction, the damper 60 absorbs force with a strong spring characteristic to damp it, and therefore, the damping force of the damper 60 desirably acts strongly. Conversely, at the time of the operation in the lower limit position direction, the positive spring characteristic of the spring mechanism 30 softly and gradually acts, and therefore, the damping force of the damper 60 also only needs to be large enough to commensurate with this positive spring characteristic.

That is, as the damper 60, it is preferable to use one whose elongation-side damping force when the upper frame 10 is displaced in the upper limit position direction is high, and whose contraction-side damping force when the upper frame 10 is displaced in the lower limit position direction is low.

According to this embodiment, the balanced point in the state where a person is seated is adjusted so as to be in the vicinity of the neutral position of the upper frame 10 (middle between the upper limit position and the lower limit position, for instance) by the operation of the adjustment dial 15b of the initial position adjusting member 15. When vibration is input in this state due to bumps and potholes or the like of a road surface, the frame link mechanism 20 constituted by the parallel link structure composed of the front links 21, 21 and the rear links 22, 22 causes the upper frame 10 to move up and down so as to make the arc motion relative to the lower frame 14, with lower end portions of the front links 21, 21 and the rear links 22, 22 serving as fulcrums. In a case where the amplitude of the upper frame 10 caused by the vibration is equal to or less than a predetermined amplitude (in a case where the displacement amount in the upward direction falls within the first upper operating range Ul), in the whole spring mechanism 30, the vibration is damped using the constant load region with the substantially zero spring constant corresponding to the first upper operating range U1 and the low spring constant region with a small spring constant value corresponding to the lower operating range L. In the lower operating range L as well, in a case where the displacement amount from the neutral position is equal to or less than the predetermined amount, even if the positive spring constant of the torsion bars 41, 42 is superposed, the spring constant of the whole spring mechanism 30 resulting from the combination of the spring constant of the magnetic spring 50 and the spring constant of the torsion bars 41, 42 is smaller than the spring constant of the torsion bars 41, 42 because the magnetic spring 50 has the negative spring constant characteristic even though its absolute value is small. Therefore, the vibration is damped without large reaction force being generated.

When impact vibration is input due to large bumps and potholes or the like on a road surface, the upper frame 10 is displaced to the vicinity of the upper limit position. At this time, the large damping force of the damper 60 acts to prevent the touching on the top while alleviating and damping impact force. When the upper frame 10 is displaced to the vicinity of the lower limit position, the soft positive spring constant is exhibited by the whole spring mechanism 30 when the upper frame 10 is displaced in the range from the neutral position to the lower limit position, and the weak damping force of the damper 60 also acts, so that the impact is gradually alleviated and damped and the bottoming is reduced, using the whole stroke of the lower operating range L. Therefore, as compared with the conventional structure, a bottoming feeling accompanying a rapid increase in the damping force is reduced. Since buffer rubber members 70 for bottoming prevention are provided on the side edge portions 10a of the upper frame 10, at the time of the bottoming, the elasticity of the buffer rubber members 70 acts to give repulsive force in the upward direction to the upper frame 10, thereby alleviating the bottoming feeling.

Further, when the balanced point in the seated state is set to the vicinity of the middle in the first upper operating range U1 by the operation of the adjustment dial 15b of the initial position adjusting member 15, the constant load region with the substantially zero spring constant enables the damping of not only vibration caused by the upward-direction displacement but also vibration caused by the downward-direction displacement vibration if the up-down displacement amount of the upper frame 10 is equal to or less than the predetermined amount.

### (Test Examples)

Tests were conducted regarding static load characteristics, vibration transmission characteristics, and so on of the seat suspension 1 according to the first embodiment.

First, FIG. 7 illustrates the static load characteristic of the spring mechanism 30 composed of the combination of the torsion bars 41, 42 and the magnetic spring 50, which is used in the seat suspension 1 according to this embodiment, the static load characteristic of the torsion bars 41, 42, and the static load characteristic of the magnetic spring 50. In FIG. 7, on the horizontal axis, 0 mm is the neutral position of the upper frame 10, positive values each represent the displacement amount in the lower operating range L from the neutral position (0 mm) to the lower limit position (+20 mm) of the upper frame 10, and negative values each represent the displacement amount in the upper operating range U from the neutral position (0 mm) to the upper limit position (-20 mm) of the upper frame 10.

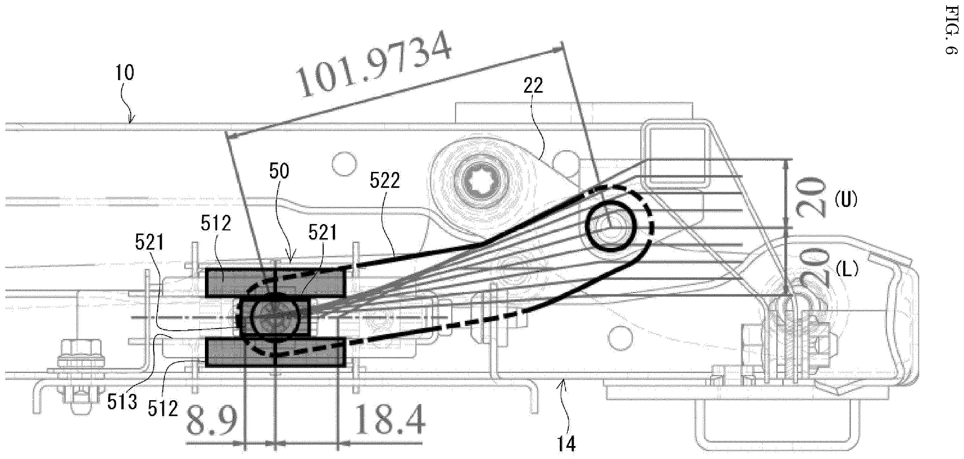

Note that the maximum movement amount of the movable magnet 521 of the magnetic spring 50 in the movement range MU corresponding to the upper operating range U of the upper frame 10 is 18.4 mm and its maximum movement amount in the movement range ML corresponding to the lower operating range L is 8.9 mm, as illustrated in FIG. 6.

Under such setting, in the load-deflection characteristic illustrated in FIG. 7, the magnetic spring 50 of this test example has a gradient that is inverted from positive to negative at the point of about -12 mm in terms of the displacement amount of the upper frame 10 (corresponding to an intermediate position of the upper operating range U). Therefore, in the seat suspension 1 of this test example, a range from 0 mm to about -12 mm is the first upper operating range U1, and a range from about -12 mm to -20 mm (upper limit position) is the second upper operating range U2. The comparison of the spring constants in these ranges shows that, in the first upper operating range U1, the spring constant of the torsion bars 41, 42 is about +20 N/mm, the spring constant of the magnetic spring 50 is about -14 N/mm, and the spring constant of the spring mechanism 30 resulting from the combination of both is about +6 N/mm, which means that the spring mechanism 30 has the constant load region where the spring constant in terms of the absolute value changes within a range equal to or less than 10 N/mm. In the second upper operating range U2, the spring constant of the torsion bars 41, 42 is about +23 N/mm, the spring constant of the magnetic spring 50 is about +14 N/mm, and the spring constant of the whole spring mechanism 30 resulting from the combination of both is about +37 N/mm, which is the positive spring constant having a higher value than that of the torsion bars 41, 42.

On the other hand, in the lower operating range L, the spring constant of the magnetic spring 50 is within a range of -4 N/mm to +1 N/mm and is a smaller value in terms of the absolute value than the spring constant of the torsion bars 41, 42, and the spring constant of the whole spring mechanism 30 resulting from the superposition of both is a soft positive spring constant slightly smaller than or substantially equal to the spring constant of the torsion bars 41, 42. More strictly, the gradient of the spring constant of the magnetic spring 50 is inverted from positive to negative at the point of about +13 mm in terms of the displacement amount of the upper frame 10. In a range from 0 mm to +13 mm, the spring constant of the torsion bars 41, 42 is about +18 N/mm, and the spring constant of the magnetic spring 50 is about -4 N/mm, and the spring constant of the whole spring mechanism 30 resulting from the combination of both is about +14 N/mm. In a range from +13 N/mm to +20 N/mm (lower limit position), the spring constant of the torsion bars 41, 42 is about +17 N/mm, the spring constant of the magnetic spring 50 is about +1 N/mm, and the spring constant of the whole spring mechanism 30 resulting from the combination of both is about +18 N/mm.

As the damper 60, one whose damping force when the piston speed is 0.3 m/s is 1370 on the elongation side and 380 N on the contraction side is used.

Next, tests were conducted on a test example 1 which is the seat suspension 1 including the torsion bars 41, 42, the magnetic spring 50, and the damper 60 ("torsion bars + magnetic spring + damper"), a test example 2 which is a seat suspension including the torsion bars 41, 42 and the magnetic spring 50 and not including the damper 60 ("torsion bars + magnetic spring"), a comparative example 1 which is a seat suspension including the torsion bars 41, 42 and the damper 60 and not including the magnetic spring 50 ("torsion bars + damper"), and a comparative example 2 which is a seat suspension including the torsion bars 41, 42 and not including the magnetic spring 50 nor the damper 60 ("torsion bars"). In the tests, a top plate was attached on the upper frame of each of the seat suspensions, and a subject was seated thereon. Incidentally, the subject was a healthy Japanese male in his forties with a 76 kg weight and a 167 cm height.

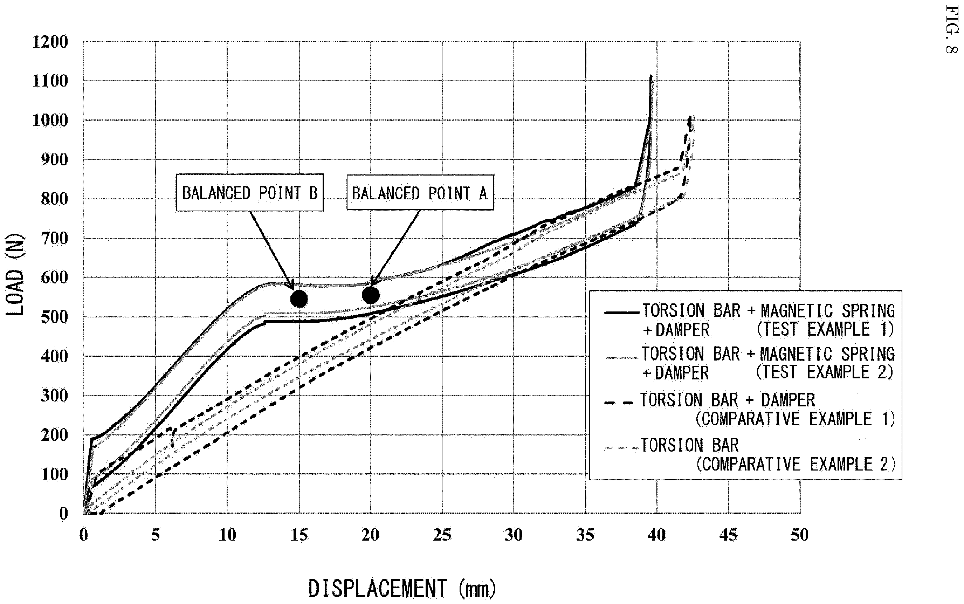

FIG. 8 illustrates static load characteristics of the test example 1, the test example 2, the comparative example 1, and the comparative example 2. Note that 0 mm, 20 mm, and 40 mm on the horizontal axis in FIG. 8 correspond respectively to -20 mm, 0 mm, and +20 mm on the horizontal axis in FIG. 7. Further, in a vibration test and so on, using the initial position adjusting member 15, a balanced point in a static state where the subject was seated was adjusted to the balanced point A (the 20 mm position on the horizontal axis in FIG. 8 and the 0 mm position on the horizontal axis in FIG. 7) which is the neutral position of the upper frame 10, and to the balanced point B which is the 15 mm position on the horizontal axis in FIG. 8 (-5 mm on the horizontal axis in FIG. 7) where the value of the spring constant is especially close to zero in the constant load region where the spring constant is substantially zero, and the measurement was conducted for both cases.

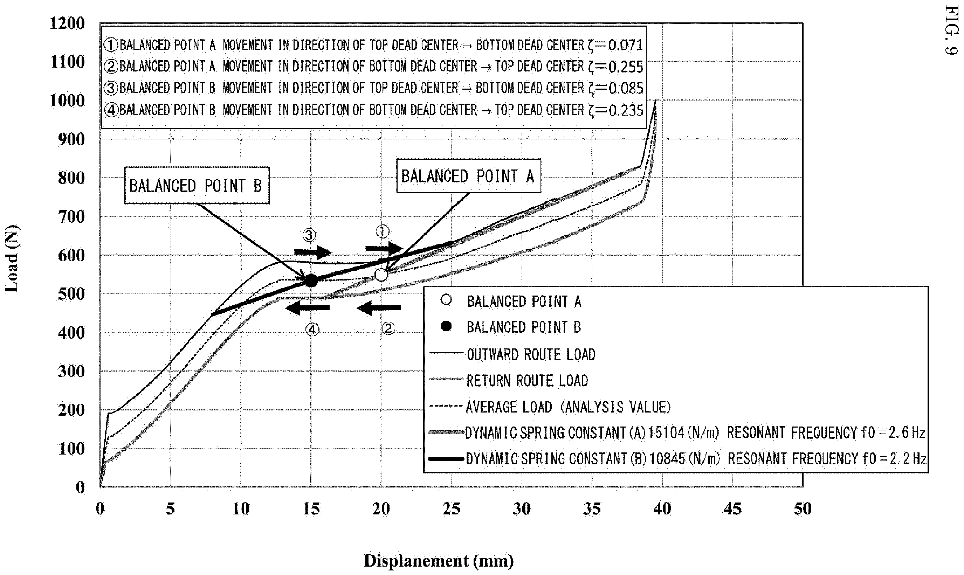

Further, regarding the seat suspension 1 of the test example, damping ratios at the balanced point A and the balanced point B in FIG. 9 were found in a case of the movement in the downward direction (direction from the upper limit position (top dead center) to the lower limit position (bottom dead center)) and in a case of the movement in the upward direction (direction from the lower limit position (bottom dead center) to the upper limit position (top dead center). Damping coefficients of the seat suspension 1 at the time of finding the damping ratios was calculated as elongation side: 469 Ns/m and contraction side: 130 Ns/m by finding component force of the damping force of the damper 60 at sin20 degrees since the damper 60 is attached at an about 20 degrees to the floor surface when the lower frame 14 is placed on the floor surface horizontally, and by using values of pip burst wave: 1.5 Hz and speed: 0.00225 m/s. As the spring constant, a value of a dynamic spring constant: 15104 N/m when a resonant frequency was 2.6 Hz was used in the case of the balanced point A, and a value of a dynamic spring constant: 10845 N/m when the resonant frequency was 2.2 Hz was used in the case of the balanced point B.

As a result, the damping ratio at the balanced point A was: downward direction: 0.071 and upward direction: 0.255, and the damping ratio at the balanced point B was: downward direction: 0.085 and upward direction: 0.235.

In this embodiment, in the case of the downward-direction movement, the damping ratio is small and the positive spring constant of the spring mechanism 30 acts, resulting in the gradual buffering, but in the case of the upward-direction movement, a damping ratio larger than that in the case of the downward direction movement acts, enabling the efficient damping of vibration and impact. In addition, the damping ratio in the upward direction is 0.255 at the balanced point A and is 0.235 at the balanced point B, and they are values around 0.25 which is considered as optimum as an automobile suspension.

Further, the spring constants (static spring constants) near the aforesaid balanced points A, B are about 6 N/mm to about 14 N/mm as described above, and the aforesaid dynamic spring constant is also about 10 N/mm to about 15 N/mm and thus is very low, and in addition, Coulomb friction force of the seat suspension 1 also has a relatively small value of about 100 N. Therefore, high vibration damping performance can be expected even if the balanced point is changed by a posture change, input vibration, or the like. Further, as will be described in the evaluation of later-described SEAT values, the structure of this embodiment has attained results satisfying the levels of two different standards of the input spectral class EM6 (7.6 excitation center frequency and a 0.34 (m/s²)²/Hz maximum value of PSD) and the input spectral class EM8 (3.3 excitation center frequency and a 0.4 (m/s²)²/Hz maximum value of PSD). This is because, since the spring constant and the damping ratio of the seat suspension 1 in the case of the upward-direction displacement is different from those in the case of the downward-direction displacement, the acting damping ratio differs depending on the balanced point which changes according to the position of the gravity center of the seated person, input vibration, or the like, as described above.

### (Vibration Test)

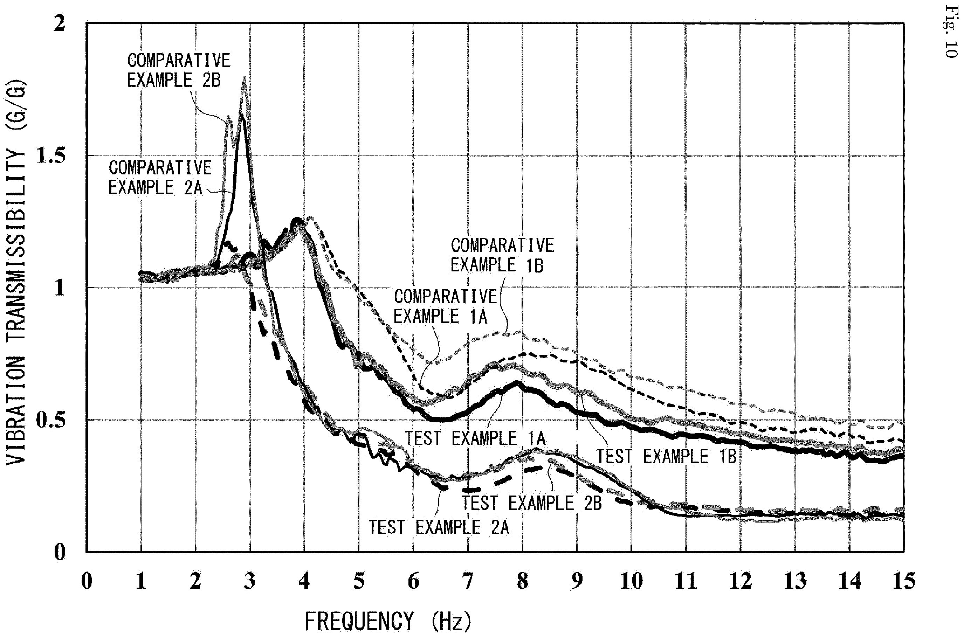

A vibration test was conducted as follows. A subject was seated on the top plate of each of the seat suspensions of the test examples and the comparative examples which were set on a vertical uniaxial vibrator, and vibration having a sine logarithmic sweep (0.5 to 15 Hz) with a ±1 mm amplitude was applied. FIG. 10 illustrates the results. In FIG. 10, the test example 1A, the test example 2A, the comparative example 1A, and the comparative example 2A are data when the balanced point at the time when the subject is seated is adjusted to the "balanced point A" in FIG. 8, and the test example 1B, the test example 2B, the comparative example 1B, and the comparative example 2B are data when the balanced point at the time when the subject is seated is adjusted to the "balanced point B" in FIG. 8.

First, the comparison between the test examples 2A, 2B and the comparative examples 2A, 2B which do not include the damper 60 and are different in the present/absence of the magnetic spring 50 shows that the test examples 2A, 2B are far lower in vibration transmissibility at the resonance point. The comparison between the test examples 1A, 1B and the comparative examples 1A, 1B which include the damper 60 but are different in the presence/absence of the magnetic spring 50 shows that the test examples 1A, 1B are not only slightly lower in resonant frequency but also noticeably lower in vibration transmissibility at and after 4Hz. From this, it is seen that the magnetic spring 50 contributes to an improvement in vibration transmission characteristic.

### (Impact Test)

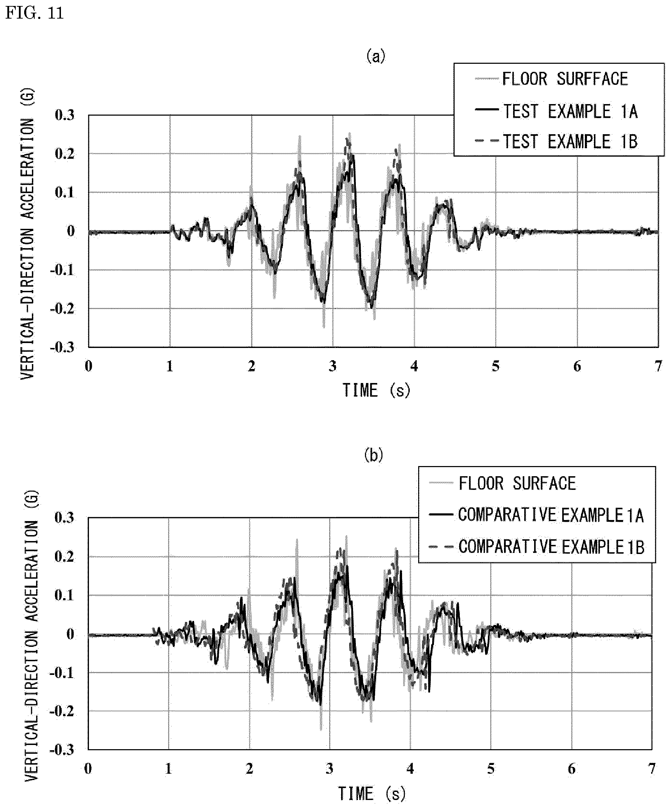

In the measurement of impact vibration, the evaluation was made from waveforms with large amplitude (maximum acceleration 0.28 G) by a pip burst waveform with a low frequency (1.5 Hz). Incidentally, this test was conducted on the test examples 1A, 1B and the comparative examples 1A, 1B each having the damper 60 because those without the damper 60 give a large load to the subject. FIG. 11(a) illustrates the results of the test examples 1A, 1B, and FIG. 11(b) illustrates the results of the comparative examples 1A, 1B.

The comparison between the test example 1A and the test example 1B showed that the acceleration of the test example 1B in the case of the balanced point B was slightly higher, and the comparison between the comparative example 1A and the comparative example 1B also showed that the acceleration of the comparative example 1B in the case of the the balanced point B was slightly higher. Incidentally, the comparison between the test example 1A and the comparative example 1A and the comparison between the test example 1B and the comparative example 1B did not show a great difference, but in any of these, no collision of the upper frame 10 at the stroke end occurred, which shows that the damper 60 used is proper.

### (Evaluation of SEAT Values)

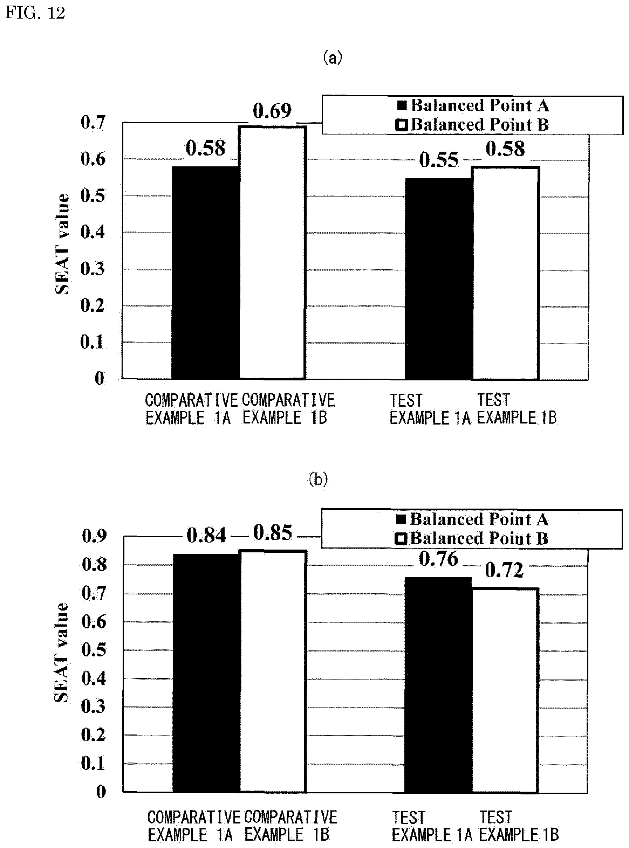

The SEAT values (Seat Effective Amplitude Transmissibility factors) were found based on JIS A 8304:2001 (ISO 7096:2000). FIG. 12(a) illustrates the results of a test which was conducted under the input spectral class EM6 (7.6 excitation center frequency, a 0.34 (m/s²)²/Hz maximum value of PSD) which is the standard for "crawler tractor-dozer with 50,000 kg or less", assuming a case where the seat suspension is used for a driver seat of a forklift. The obtained SEAT value was 0.55 in the test example 1A, 0.58 in the test example 1B, 0.58 in the comparative example 1, and 0.69 in the comparative example 1B. Since the standard of the SEAT value of EM6 is less than 0.7, the comparative examples 1A, 1B also satisfied the standard, but the results of the test examples 1A, 1B were better. Further, FIG. 12(b) illustrates the results of a test which was conducted under the input spectral class EM8 (3.3 excitation center frequency, a 0.4 (m/s²)²/Hz maximum value of PSD) which is the standard for "compact loader with 45,000 kg or less". The obtained SEAT value was 0.76 in the test example 1A and 0.72 in the test example 1B, which were higher results than 0.84 in the comparative example 1 and 0.85 in the comparative example 1B. Since the standard of the SEAT value of EM8 is less than 0.8, the test examples 1A, 1B satisfied the standard.

Further, under EM6 having a dominant frequency in a relatively high frequency band of 7.6 Hz, the result was better in the test example 1A than in the test example 1B, and under EM8 having a dominant frequency in a relatively low frequency band of 3.3 Hz, the result was better in the test example 1B.

### (Change Amount of Balanced Point)

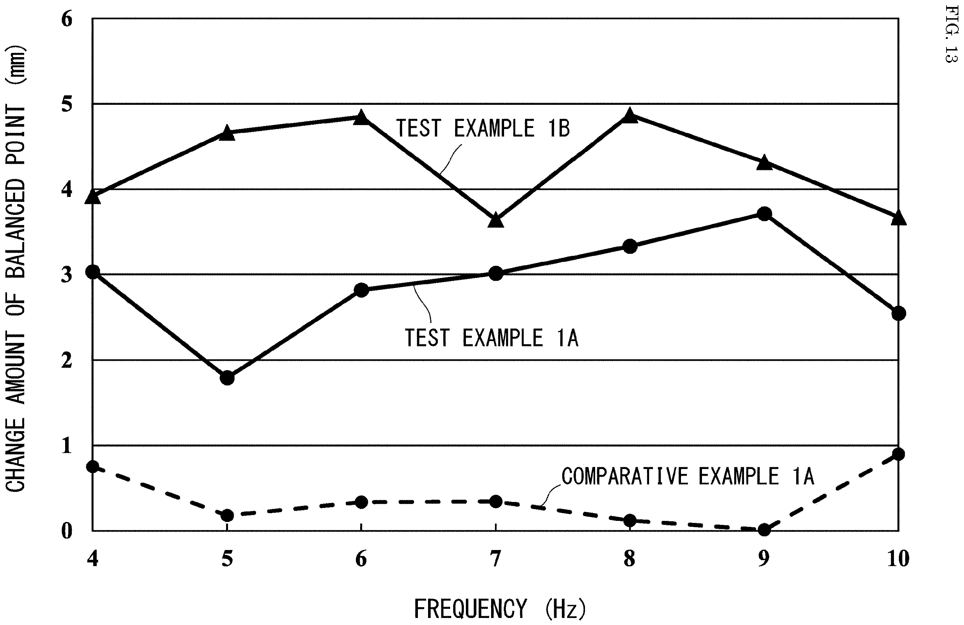

FIG. 13 illustrates data of change amounts from a balanced point in a static state when a subject is seated, to a balanced point in a dynamic vibrating state, at each frequency.

Almost no change is seen in the comparative example 1A, but in the test example 1A and the test example 1B, the balanced point is higher in the dynamic state than in the static state by about 3 mm and by about 4 mm respectively. A possible reason for this may be that the friction of the frame link mechanism 20 changes from static friction to dynamic friction and as a result, the vibration absorbency of the magnetic spring in a damping region (the region of the negative spring characteristic) improves, and especially when the input acceleration is large, a high effect is exhibited. Further, the dynamic friction is smaller in the test example 1B in which the balanced point is B than in the test example 1A in which the balanced point is A, and the test example 1B is suitable for damping input vibration in a relatively high frequency band. From this, it can be said that the seat suspension 1 of this embodiment including the test examples 1A, 1B is a vibration damping mechanism effective for a wide range of input vibration because its balanced point changes according to the input vibration.

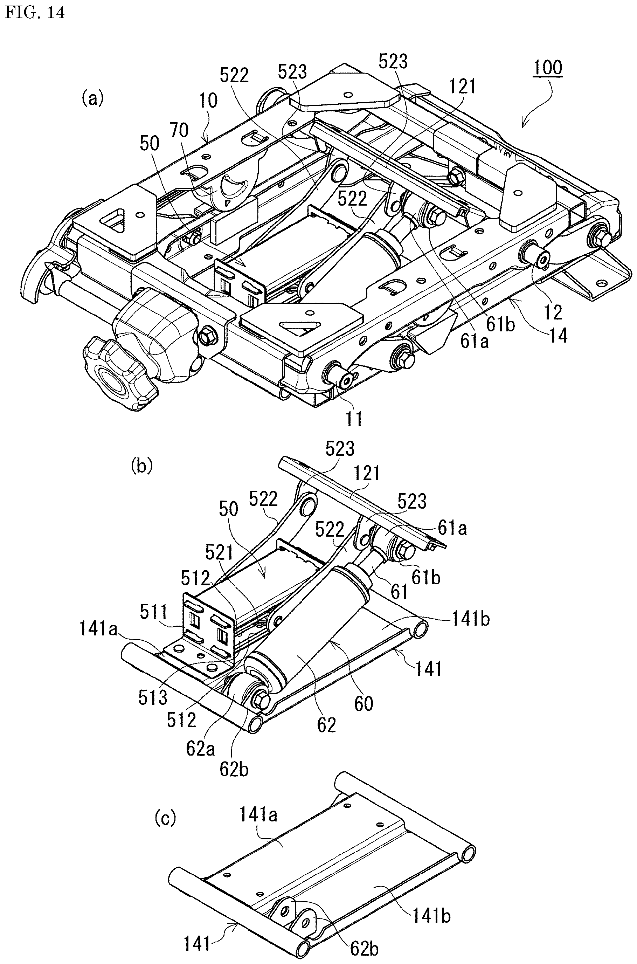

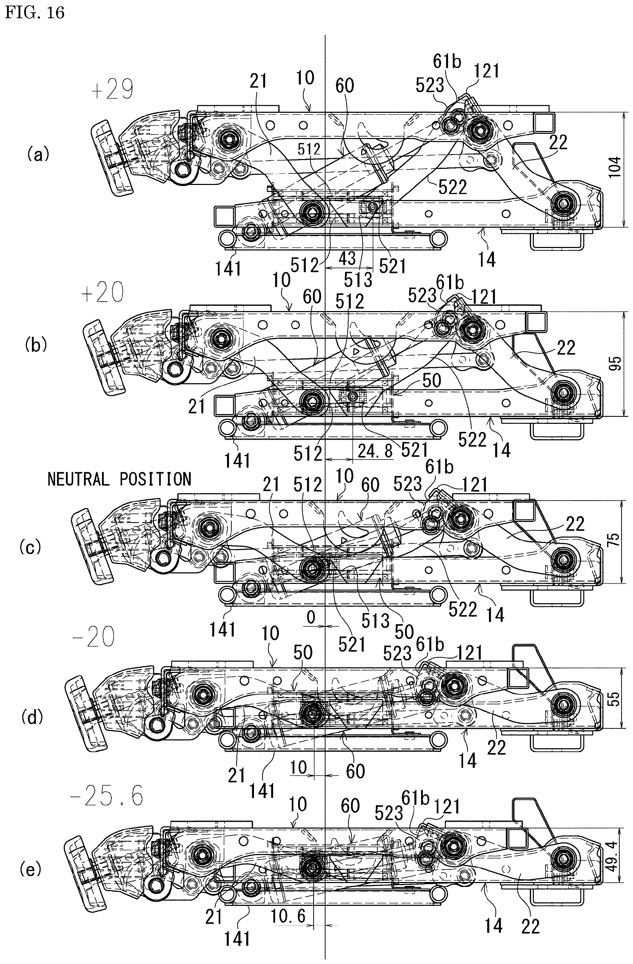

Next, a seat suspension 100 according to a second embodiment of the present invention will be described based on FIGs. 14 to FIG. 17. Note that members having the same functions as those of the first embodiment are denoted by the same reference signs. The seat suspension 100 of this embodiment is the same as that of the above-described first embodiment in that the upper frame 10 is moved up and down relative to the lower frame 14 by the front links 21, 21 and the rear links 22, 22 which constitute the parallel link structure, but is different from that of the first embodiment in that an up-down stroke amount is larger than that in the first embodiment (refer to FIGs. 16). The stationary magnets 512, 512 and the movable magnet 521 which are used in the magnetic spring 50 are equal in size to those of the above-described first embodiment, and the relative position of the movable magnet 521 and the stationary magnets 512, 512 when the upper frame 10 is at the neutral position is also the same as that in the above-described first embodiment. However, on the stationary-side magnet support frame 511 supporting the stationary magnet 512, the space 513 serving as the passage of the movable magnet 521 extends longer in the rear direction of the seat suspension 100 than in the above-described first embodiment so that, when moving in the movement range MU corresponding to the upper operating range U, the movable magnet 521 is capable of moving beyond the range where the stationary magnets 512, 512 face each other.

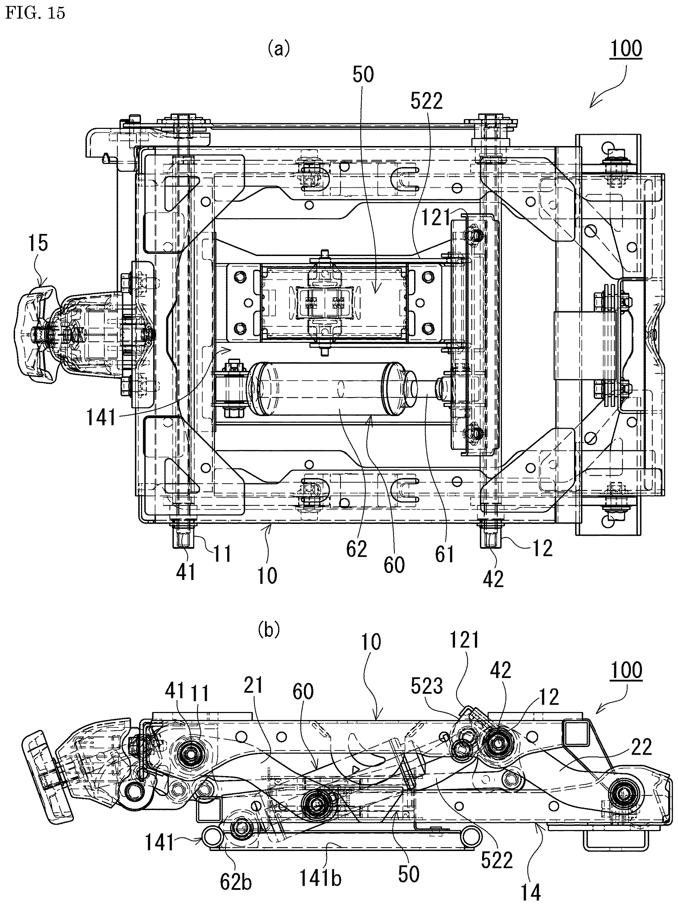

Further, as illustrated in FIGs. 14 and FIGs. 15, an auxiliary frame 121 is provided on the upper rear frame 12 so as to project front obliquely upward. On the auxiliary frame 121, the brackets (hereinafter, "piston rod brackets") 61b pivotally supporting the end portion 61a of the piston rod 61 of the damper 60 is provided so as to project obliquely downward. Further, in this embodiment, on the auxiliary frame 121, the brackets (hereinafter, "magnet link brackets") 523 pivotally supporting the end portions of the magnet links 522 supporting the movable magnet 521 are provided adjacently to the piston rod bracket 61b, as illustrated in FIG. 14(b). Since the upper rear frame 12 rotates in accordance with the up-down movement of the upper frame 10 as in the above-described first embodiment, as the upper frame 10 moves from the upper limit position toward the lower limit position, the auxiliary frame 121 attached to the upper rear frame 12 rotates front obliquely downward in accordance with the rotation of the upper rear frame 12. Accordingly, the piston rod brackets 61b and the magnet link brackets 523 which are attached to the auxiliary frame 121 also rotate in the same direction as the auxiliary frame 121.

Further, since the piston rod brackets 61b and the magnet link brackets 523 are attached not on the upper rear frame 12 but on the auxiliary frame 121 projecting front obliquely forward, the strokes of the damper 60 and the magnet links 522 can be larger than in the above-described first embodiment.

Further, a lower attachment plate 141 where the end portion 62a of the cylinder 62 of the damper 60 and the stationary-side magnet support frame 511 supporting the stationary magnets 512, 512 of the magnetic spring 50 are attached is fixed to the lower frame 14. Further, as illustrated in FIGs. 14(b), (c), on the lower attachment plate 141, a magnetic spring support portion 141a and a damper support portion 141b are adjacent to each other in the width direction of the seat suspension 100, but the height of an attachment surface of the damper support portion 141b is slightly lower than the height of an attachment surface of the magnetic spring support portion 141a. The brackets (hereinafter, "cylinder brackets") 62b pivotally supporting the end portion 62a of the cylinder 62 is provided on a front end portion of the damper support portion 141b, and disposing the cylinder brackets 62b at a lower height enables the stroke of the damper 60 to be large.

According to this embodiment, the magnet link brackets 523 are attached on the auxiliary frame 121 projecting front obliquely forward as described above. Therefore, in a case where, as illustrated in FIG. 16(c), the movable magnet 521 of the movable magnet unit 52 is set such that, when the upper frame 10 is at the neutral position, the center position of the movable magnet 521 is substantially at the same position as the boundary of the two adjacent stationary magnets 512, 512 whose different poles are adjacent to each other, the rearward movement amount of the movable magnet 521 in the movement range MU corresponding to the upper operating range U from the neutral position to the upper limit position (in this example, a position 29 mm higher than the neutral position (FIG. 16(a)) of the upper frame 10 is 43 mm at the maximum.

On the other hand, the forward movement amount of the movable magnet 521 in the movement range ML corresponding to the lower operating range L from the neutral position to the lower limit position (in this example, a position 25.6 mm lower than the neutral position (FIG. 16(e)) of the upper frame 10 is 10.6 mm at the maximum.

Further, as described above, the damper 60 is also provided between the auxiliary frame 121 projecting front obliquely forward and the damper support portion 141b whose attachment surface is set at the lower position, and the auxiliary frame 121 rotates between a front obliquely downward position and a rear obliquely upward position. Therefore, the up-down stroke amount of the upper frame 10 can be larger than that in the first embodiment.

Specifically, as described above, in the seat suspension 100 of this embodiment, the stroke of the upper operating range U from the neutral position to the upper limit position is 29 mm, the stroke of the lower operating range L from the neutral position to the lower limit position is 25.6 mm, and the total stroke from the upper limit position to the lower limit position is 54.6 mm, which is longer by 14.6 mm than in the first embodiment where the stroke in each of the upper side and the lower side from the neutral position is 20 mm and the total stroke from the upper limit position to the lower limit position is 40 mm. The magnetic spring 50 and the damper 60 used in this embodiment are equal in size to those of the first embodiment, but owing to the above-described structure, the movement amount of the movable magnet 521 along the space 513 between the stationary magnets 512, 512 and the movement amount of the piston supported by the piston rod 61 in the cylinder 62 are larger, which enables to adapt to an increase in the up-down stroke amount of the upper frame 10.

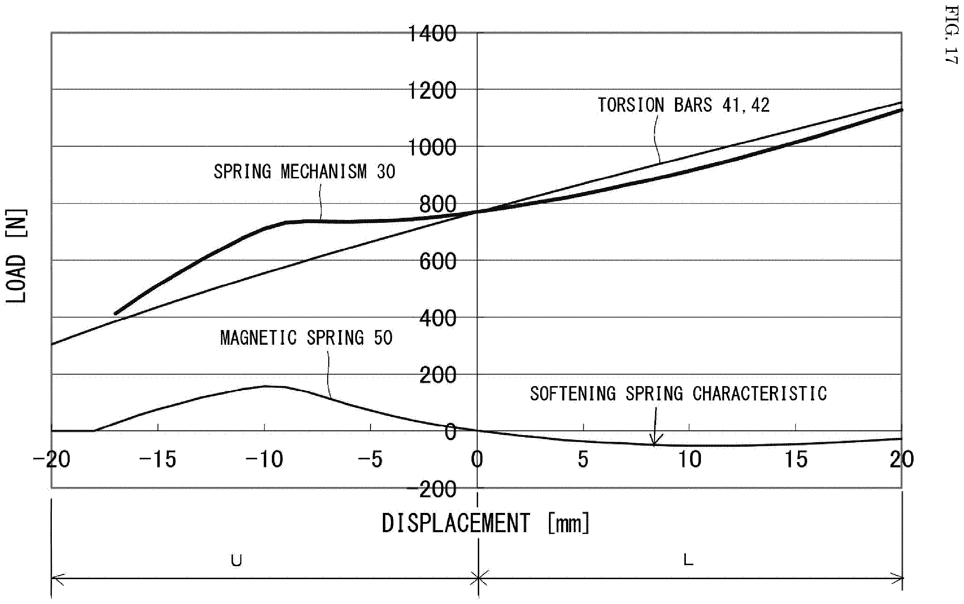

FIG. 17 illustrates static load characteristics in the seat suspension 100 of this embodiment. As illustrated in this drawing, in this embodiment as well, the spring constant of the magnetic spring 50 changes from positive to negative at an intermediate position of the upper operating range U, and in the negative spring characteristic range, the positive spring characteristic of the torsion bars 41, 42 is superposed, so that the constant load region with a substantially zero spring constant is formed. Further, since the movement amount of the movable magnet 521 corresponding to the lower operating range L is smaller than the movement amount of the movable magnet 521 corresponding to the upper operating range U, the magnetic spring 50 has a smaller spring constant in terms of the absolute value in the lower operating range L than in the upper operating range U, and exhibits the softening spring characteristic. Therefore, in the lower operating range L, the soft positive spring constant functions as the whole spring mechanism 30, and even if the stroke amount of the upper frame 10 relative to the lower frame 14 increases, the same operation and effect as those of the above-described first embodiment are brought about.

### Explanation of Reference Signs

- 1, 100: seat suspension
- 10: upper frame
- 11: upper front frame
- 12: upper rear frame
- 14: lower frame
- 15: initial position adjusting member
- 20: frame link mechanism
- 21: front link
- 22: rear link
- 30: spring mechanism
- 41, 42: torsion bar
- 50: magnetic spring
- 51: stationary magnet unit
- 512: stationary magnet
- 52: movable magnet unit
- 521: movable magnet
- 60: damper
- 61: piston rod
- 61b: bracket (piston rod bracket)
- 62: cylinder
- 62b: bracket (cylinder bracket)

## Claims

1. A suspension (1) which includes: an upper frame (10) and a lower frame (14) which are supported so as to be capable of a separating and approaching operation relative to each other via a frame link mechanism (20); and a spring mechanism which elastically biases the upper frame,
the spring mechanism comprising a combination of:
a linear spring (41, 42) which biases the upper frame (10) in a direction in which the upper frame (10) separates from the lower frame (14), the linear spring (41, 42) exhibiting a linear characteristic; and
a magnetic spring (50) which includes: a stationary magnet (51) fixedly disposed on the lower frame (14) or the upper frame (10), and a movable magnet (52) which is supported on the upper frame (10) or the lower frame (14) through a magnet link (522) and whose position relative to the stationary magnet (51) changes in accordance with the separating and approaching operation of the upper frame (10), the magnetic spring (50) exhibiting a nonlinear characteristic of having a spring constant that varies according to the relative position of the stationary magnet (51) and the movable magnet (52), **characterized in that** , in the magnetic spring,(50), a displacement amount of the movable magnet (52) when the upper frame (10) is displaced in a lower operating range (L) which is between a neutral position and a lower limit position of the upper frame (10) is smaller than a displacement amount of the movable magnet (52) when the upper frame (10) is displaced in an upper operating range (U) which is between the neutral position and an upper limit position of the upper frame (10), and the magnetic spring (50) has a softening spring characteristic that, when the upper frame (10) makes a downward-direction relative displacement, a spring constant of the magnetic spring (50) which acts when the upper frame (10) is displaced in the lower operating range (L) is smaller than a spring constant of the magnetic spring (50) which acts when the upper frame (10) is displaced in the upper operating range (U).

2. The suspension (1) according to claim 1, wherein, in accordance with the displacement of the movable magnet (52) relative to the stationary magnet (51),
the magnetic spring (50) exhibits a negative spring characteristic when the upper frame (10) is displaced in a first upper operating range (U1) and exhibits a positive spring characteristic when the upper frame (10) is displaced in a second upper operating range (U2), where the first upper operating range (U1) and the second upper operating range (U2) are respectively on the neutral position side and on the upper limit position side of an intermediate position of the upper operating range (U) which is between the neutral position and the upper limit position, and the positive spring characteristic and the negative spring characteristic are characteristics that restoring force in the same direction as a working direction of restoring force of the linear spring increases and reduces respectively,
the magnetic spring (50) exhibits a spring constant smaller than a spring constant of the linear spring (41, 42) when the upper frame (10) is displaced in the lower operating range (L), and
a spring characteristic of the whole spring mechanism which results from a combination of the positive spring characteristic of the linear spring and each of the spring characteristics of the magnetic spring (50) has:
a constant load region when the upper frame (10) is displaced in the first upper operating range (U1), the constant load region being a region where a spring constant is substantially constant due to the superposed positive spring characteristic of the linear spring; a high spring constant region when the upper frame (10) is displaced in the second upper operating range (U2), the high spring constant region being a region where the spring constant is higher due to the two superposed positive spring constants; and a low spring constant region when the upper frame (10) is displaced in the lower operating range (L), the low spring constant region being a region where the spring characteristic corresponding to the entire lower operating range (L) is a positive spring characteristic with a lower spring constant than in the high spring constant region.

3. The suspension (1) according to claim 1 or 2, wherein the movement amount of the movable magnet (52) of the magnetic spring (50) when the upper frame (10) is displaced in the lower operating range (L) is equal to or less than 1/2 of the movement amount of the movable magnet (52) when the upper frame (10) is displaced in the upper operating range (U).

4. The suspension (1) according to any one of claims 1 to 3, further comprising a damper (60) which damps energy generated when the upper frame (10) makes the separating and approaching operation from/to the lower frame (14),
wherein the damper (60) is lower in damping force when the upper frame (10) operates in a direction of the lower limit position than when the upper frame (10) operates in a direction of the upper limit position.

5. The suspension (1) according to claim 4, wherein the damper (60) is pivotally supported on the upper frame (10) through a bracket (61b) which pivots in accordance with an up-down movement of the upper frame (10).

6. The suspension (1) according to any one of claims 1 to 5, wherein, an up-down displacement amount of the upper frame (10) is a predetermined amount or more, the movable magnet (52) of the magnetic spring (50) is capable of being moved by the magnet link (522) to a facing range outer position which is beyond a range where the movable magnet (52) faces the stationary magnet (51).

7. The suspension (1) according to any one of claims 1 to 6, wherein a balanced point when a weight of a load is applied to the upper frame changes according to a gravity center position of a seated person or input vibration, and a damping ratio at the balanced point varies according to a position of the balanced point.

8. The suspension (1) according to any one of claims 1 to 7, wherein an initial position of the balanced point when the weight of the load is applied to the upper frame (10) is adjustable.

9. The suspension (1) according to any one of claims 1 to 8, wherein the suspension (1) being used as a seat suspension of a vehicle in which the lower frame (14) is fixed to a vehicle body and a seat is supported by the upper frame (10).

## Patentansprüche

1. Aufhängung (1), die Folgendes einschließt: einen oberen Rahmen (10) und einen unteren Rahmen (14), die gelagert sind, um imstande zu sein, über einen Rahmenverbindungsmechanismus (20) einen Trenn- und Annäherungsvorgang in Bezug zueinander auszuführen; und einen Federmechanismus, der den oberen Rahmen elastisch vorspannt,
wobei der Federmechanismus eine Kombination von Folgendem umfasst:
einer linearen Feder (41, 42), die den oberen Rahmen (10) in eine Richtung vorspannt, in der sich der obere Rahmen (10) vom unteren Rahmen (14) trennt, wobei die lineare Feder (41, 42) eine lineare Kennlinie zeigt; und
einer Magnetfeder (50), die Folgendes einschließt: einen ortsfesten Magneten (51), der fest an dem unteren Rahmen (14) oder dem oberen Rahmen (10) angeordnet ist, und einen beweglichen Magneten (52), der am oberen Rahmen (10) oder am unteren Rahmen (14) durch eine Magnetverbindung (522) gelagert ist und dessen Position sich relativ zu dem ortsfesten Magneten (51) gemäß dem Trenn- und Annäherungsvorgang des oberen Rahmens (10) ändert, wobei die Magnetfeder (50) eine nichtlineare Kennlinie des Aufweisens einer Federkonstante zeigt, die gemäß der relativen Position des ortsfesten Magneten (51) und des beweglichen Magneten (52) variiert,
**dadurch gekennzeichnet, dass** in der Magnetfeder (50) einen Verschiebungsumfang des beweglichen Magneten (52), wenn der obere Rahmen (10) in einem unteren Betriebsbereich (L) verschoben wird, der zwischen einer neutralen Position und einer unteren Grenzposition des oberen Rahmens (10) liegt, kleiner ist als ein Verschiebungsumfang des beweglichen Magneten (52), wenn der obere Rahmens (10) in einem oberen Betriebsbereich (U) verschoben wird, der zwischen der neutralen Position und einer oberen Grenzposition des oberen Rahmens (10) liegt, und die Magnetfeder (50) eine abschwächende Federkennlinie aufweist, die, wenn der obere Rahmen (10) eine relative Verschiebung nach unten ausführt, eine Federkonstante der Magnetfeder (50), die wirkt, wenn der obere Rahmen (10) in dem unteren Betriebsbereich (L) verschoben wird, kleiner ist als eine Federkonstante der Magnetfeder (50), die wirkt, wenn der obere Rahmen (10) im oberen Betriebsbereich (U) verschoben wird.

2. Aufhängung (1) nach Anspruch 1, wobei gemäß der Verschiebung des beweglichen Magneten (52) relativ zum ortsfesten Magneten (51)
die Magnetfeder (50) eine negative Federkennlinie zeigt, wenn der obere Rahmen (10) in einem ersten oberen Betriebsbereich (U1) verschoben wird, und eine positive Federkennlinie zeigt, wenn der obere Rahmen (10) in einem zweiten oberen Betriebsbereich (U2) verschoben wird, wobei sich der erste obere Betriebsbereich (U1) und der zweite obere Betriebsbereich (U2) jeweils auf der Seite der neutralen Position und auf der Seite der oberen Grenzposition einer Zwischenposition des oberen Betriebsbereichs (U) befinden, der zwischen der neutralen Position und der oberen Grenzposition ist, und die positive Federkennlinie und die negative Federkennlinie Kennlinien sind, bei denen die Rückstellkraft in der gleichen Richtung wie eine Arbeitsrichtung der Rückstellkraft der linearen Feder jeweils zunimmt und abnimmt,
wobei die Magnetfeder (50) eine Federkonstante zeigt, die kleiner als eine Federkonstante der linearen Feder (41, 42) ist, wenn der obere Rahmen (10) im unteren Betriebsbereich (L) verschoben wird, und
eine Federkennlinie des gesamten Federmechanismus, der sich aus einer Kombination der positiven Federkennlinie der linearen Feder und jeder der Federkennlinien der Magnetfeder (50) ergibt, Folgendes aufweist:
einen Bereich konstanter Last, wenn der obere Rahmen (10) in dem ersten oberen Betriebsbereich (U1) verschoben wird, wobei der Bereich konstanter Last ein Bereich ist, in dem eine Federkonstante aufgrund der überlagerten positiven Federkennlinie der linearen Feder im Wesentlichen konstant ist;
einen Bereich mit hoher Federkonstante, wenn der obere Rahmen (10) in dem zweiten oberen Betriebsbereich (U2) verschoben wird, wobei der Bereich mit hoher Federkonstante ein Bereich ist, in dem die Federkonstante aufgrund der zwei überlagerten positiven Federkonstanten höher ist; und einen Bereich mit niedriger Federkonstante, wenn der obere Rahmen (10) im unteren Betriebsbereich (L) verschoben wird, wobei der Bereich mit niedriger Federkonstante ein Bereich ist, in dem die Federkennlinie, die dem gesamten unteren Betriebsbereich (L) entspricht, eine positive Federkennlinie mit einer niedrigeren Federkonstante als im Bereich der hohen Federkonstante ist.

3. Aufhängung (1) nach Anspruch 1 oder 2, wobei der Bewegungsumfang des beweglichen Magneten (52) der Magnetfeder (50), wenn der obere Rahmen (10) im unteren Betriebsbereich (L) verschoben wird, gleich oder kleiner als die Hälfte des Bewegungsumfangs des beweglichen Magneten (52) ist, wenn der obere Rahmen (10) im oberen Betriebsbereich (U) verschoben wird.

4. Aufhängung (1) nach einem der Ansprüche 1 bis 3, weiter umfassend einen Dämpfer (60), der die Energie dämpft, die erzeugt wird, wenn der obere Rahmen (10) den Trenn- und Annäherungsvorgang vom/zum unteren Rahmen (14) ausführt,
wobei die Dämpfungskraft des Dämpfers (60) geringer ist, wenn der obere Rahmen (10) in einer Richtung der unteren Grenzposition arbeitet, als wenn der obere Rahmen (10) in einer Richtung der oberen Grenzposition arbeitet.

5. Aufhängung (1) nach Anspruch 4, wobei der Dämpfer (60) schwenkbar am oberen Rahmen (10) durch einen Bügel (61b) gelagert ist, der gemäß einer Auf-Ab-Bewegung des oberen Rahmens (10) schwenkt.

6. Aufhängung (1) nach einem der Ansprüche 1 bis 5, wobei ein Auf-Ab-Verschiebungsumfang des oberen Rahmens (10) ein vorbestimmter Umfang oder mehr ist, wobei der bewegliche Magnet (52) der Magnetfeder (50) durch die Magnetverbindung (522) imstande ist, in eine äußere Position des gegenüberliegenden Bereichs bewegt zu werden, die außerhalb eines Bereichs liegt, in dem der bewegliche Magnet (52) dem ortsfesten Magneten (51) zugewandt ist.

7. Aufhängung (1) nach einem der Ansprüche 1 bis 6, wobei sich ein ausgewogener Punkt, wenn ein Gewicht einer Last an den oberen Rahmen angelegt wird, gemäß einer Schwerpunktposition einer sitzenden Person ändert oder Eingangsschwingung ändert, und ein Dämpfungsverhältnis am ausgewogenen Punkt je nach Position des ausgewogenen Punktes variiert.

8. Aufhängung (1) nach einem der Ansprüche 1 bis 7, wobei eine Anfangsposition des ausgewogenen Punkts, wenn das Gewicht der Last an den oberen Rahmen (10) angelegt wird, einstellbar ist.

9. Aufhängung (1) nach einem der Ansprüche 1 bis 8, wobei die Aufhängung (1) als Sitzaufhängung eines Fahrzeugs verwendet wird, in dem der untere Rahmen (14) an einer Fahrzeugkarosserie befestigt ist und ein Sitz durch den oberen Rahmen (10) gelagert wird.

## Revendications

1. Suspension (1) qui inclut: un cadre supérieur (10) et un cadre inférieur (14) qui sont supportés de sorte à être capables de réaliser une opération de séparation et d'approche l'un par rapport à l'autre via un mécanisme de lien de cadre (20) ; et un mécanisme de ressort qui polarise élastiquement le cadre supérieur,
le mécanisme de ressort comprenant une combinaison de :
un ressort linéaire (41, 42) qui polarise le cadre supérieur (10) dans une direction dans laquelle le cadre supérieur (10) se sépare du cadre inférieur (14), le ressort linéaire (41, 42) montrant une caractéristique linéaire ; et
un ressort magnétique (50) qui inclut : un aimant stationnaire (51) disposé fixement sur le cadre inférieur (14) ou le cadre supérieur (10), et un aimant mobile (52) qui est supporté sur le cadre supérieur (10) ou le cadre inférieur (14) à travers un lien magnétique (522) et dont la position par rapport à l'aimant stationnaire (51) change selon l'opération de séparation et d'approche du cadre supérieur (10), le ressort magnétique (50) montrant une caractéristique non linéaire de présentation d'une constante de ressort qui varie selon la position relative de l'aimant stationnaire (51) et de l'aimant mobile (52), **caractérisé en ce que** dans le ressort magnétique (50), une quantité de déplacement de l'aimant mobile (52) lorsque le cadre supérieur (10) est déplacé dans une plage de fonctionnement inférieure (L) qui est entre une position neutre et une position limite inférieure du cadre supérieur (10) est inférieure à une quantité de déplacement de l'aimant mobile (52) lorsque le cadre supérieur (10) est déplacé dans une plage de fonctionnement supérieure (U) qui est entre la position neutre et une position limite supérieure du cadre supérieur (10), et le ressort magnétique (50) présente une caractéristique de ressort d'amortissement qui, lorsque le cadre supérieur (10) réalise un déplacement relatif de direction vers le bas, une constante de ressort du ressort magnétique (50) qui agit lorsque le cadre supérieur (10) est déplacé dans la plage de fonctionnement inférieure (L) est inférieure à une constante de ressort du ressort magnétique (50) qui agit lorsque le cadre supérieur (10) est déplacé dans la plage de fonctionnement supérieure (U).

2. Suspension (1) selon la revendication 1, dans laquelle, selon le déplacement de l'aimant mobile (52) par rapport à l'aimant stationnaire (51),
le ressort magnétique (50) montre une caractéristique de ressort négative lorsque le cadre supérieur (10) est déplacé dans une première plage de fonctionnement supérieure (U1) et montre une caractéristique de ressort positive lorsque le cadre supérieur (10) est déplacé dans une seconde plage de fonctionnement supérieure (U2), où la première plage de fonctionnement supérieure (U1) et la seconde plage de fonctionnement supérieure (U2) sont respectivement sur le côté de position neutre et sur le côté de position limite supérieure d'une position intermédiaire de la plage de fonctionnement supérieure (U) qui est entre la position neutre et la position limite supérieure, et la caractéristique de ressort positive et la caractéristique de ressort négative sont des caractéristiques que la force de restauration dans la même direction qu'une direction de travail de la force de restauration du ressort linéaire augmente et réduit respectivement,
le ressort magnétique (50) montre une constante de ressort inférieure à une constante de ressort du ressort linéaire (41, 42) lorsque le cadre supérieur (10) est déplacé dans la plage de fonctionnement inférieure (L), et
une caractéristique de ressort du mécanisme de ressort entier qui résulte d'une combinaison de la caractéristique de ressort positive du ressort linéaire et chacune des caractéristiques de ressort du ressort magnétique (50) présente :
une région de charge constante lorsque le cadre supérieur (10) est déplacé dans la première plage de fonctionnement supérieure (U1), la région de charge constante étant une région où une constante de ressort est sensiblement constante en raison de la caractéristique de ressort positive superposée du ressort linéaire ; une région de constante de ressort élevée lorsque le cadre supérieur (10) est déplacé dans la seconde plage de fonctionnement supérieure (U2), la région de constante de ressort élevée étant une région où la constante de ressort est supérieure en raison des deux constantes de ressort positives superposées ; et une région de constante de ressort basse lorsque le cadre supérieur (10) est déplacé dans la plage de fonctionnement inférieure (L), la région de constante de ressort basse étant une région où la caractéristique de ressort correspondant à la plage de fonctionnement inférieure entière (L) est une caractéristique de ressort positive avec une constante de ressort inférieure à celle dans la région de constante de ressort élevée.

3. Suspension (1) selon la revendication 1 ou 2, dans laquelle la quantité de mouvement de l'aimant mobile (52) du ressort magnétique (50) lorsque le cadre supérieur (10) est déplacé dans la plage de fonctionnement inférieure (L) est égale ou inférieure à % de la quantité de mouvement de l'aimant mobile (52) lorsque le cadre supérieur (10) est déplacé dans la plage de fonctionnement supérieure (U).

4. Suspension (1) selon l'une quelconque des revendications 1 à 3, comprenant en outre un amortisseur (60) qui amortit de l'énergie générée lorsque le cadre supérieur (10) réalise l'opération de séparation et d'approche depuis/vers le cadre inférieur (14),
dans laquelle l'amortisseur (60) est inférieur en force d'amortissement lorsque le cadre supérieur (10) fonctionne dans une direction de la position limite inférieure à celle lorsque le cadre supérieur (10) fonctionne dans une direction de la position limite supérieure.

5. Suspension (1) selon la revendication 4, dans laquelle l'amortisseur (60) est supporté de manière pivotante sur le cadre supérieur (10) à travers un support (61b) qui pivote selon un mouvement de haut en bas du cadre supérieur (10).

6. Suspension (1) selon l'une quelconque des revendications 1 à 5, dans laquelle une quantité de déplacement de haut en bas du cadre supérieur (10) est une quantité prédéterminée ou plus, l'aimant mobile (52) du ressort magnétique (50) est capable d'être déplacé par le lien magnétique (522) dans une position extérieure de plage avant qui est au-delà d'une plage où l'aimant mobile (52) fait face à l'aimant stationnaire (51).

7. Suspension (1) selon l'une quelconque des revendications 1 à 6, dans laquelle un point équilibré lorsqu'un poids d'une charge est appliqué au cadre supérieur change selon une position de centre de gravité d'une personne assise ou une vibration d'entrée, et un rapport d'amortissement au point équilibré varie selon une position du point équilibré.

8. Suspension (1) selon l'une quelconque des revendications 1 à 7, dans laquelle une position initiale du point équilibré lorsque le poids de la charge est appliqué au cadre supérieur (10) est ajustable.

9. Suspension (1) selon l'une quelconque des revendications 1 à 8, dans laquelle la suspension (1) est utilisée comme une suspension de siège d'un véhicule dans lequel le cadre inférieur (14) est fixé à un corps de véhicule et un siège est supporté par le cadre supérieur (10).
